Europäisches Patentamt

European Patent Office

Office européen des brevets

(11) Veröffentlichungsnummer: **0 287 968**
**A2**

(12) # EUROPÄISCHE PATENTANMELDUNG

(21) Anmeldenummer: 88106038.8

(51) Int. Cl.4: **B29B 7/60**

(22) Anmeldetag: 15.04.88

(30) Priorität: 23.04.87 DE 3713555

(43) Veröffentlichungstag der Anmeldung:
26.10.88 Patentblatt 88/43

(84) Benannte Vertragsstaaten:
DE ES FR GB IT

(71) Anmelder: **Elastogran Polyurethane GmbH**

**D-2844 Lemförde(DE)**

(72) Erfinder: **Becker, Gunther**
**Dompfaffweg 3**
**D-8192 Geretried(DE)**
Erfinder: **Reisinger, Gerhard**
**Amtmannstrasse 7**
**D-8195 Egling 2(DE)**
Erfinder: **Taubenmann, Peter**
**Strindbergstrasse 1**
**D-8000 München(DE)**
Erfinder: **Lisker, Norbert**
**Buergermeister-Schwaigerstrasse 15**
**D-8190 Wolfratshausen(DE)**

(74) Vertreter: **Karau, Wolfgang Dr. et al**
**BASF Aktiengesellschaft Carl-Bosch-Strasse**
**38**
**D-6700 Ludwigshafen(DE)**

(54) **Verfahren und Vorrichtung zum Dosieren und Mischen von Mehrkomponenten-Kunststoffen, insbesondere Polyurethan.**

(57) Das Verfahren und die Vorrichtung zum Dosieren und Mischen von Mehrkomponenten-Kunststoffen, insbesondere Polyurethan, arbeitet mit mindestens zwei zeitweise im Gegentakt betriebenen, hydraulischen Kolben-und Zylindereinheiten $A_1$ und $A_2$ für jede Komponente. Der Druck für die die Dosierung übernehmende zweite Kolben-und Zylindereinheit wird vor Beginn des Dosierens dem Druck der gerade dosierenden ersten Kolben-und Zylindereinheit angeglichen. Die Umschaltung von der einen auf die andere Kolben-und Zylindereinheit (z.B. von $A_1$ auf $A_2$) erfolgt so, daß mit dem Abschalten der ersten Kolben-und Zylindereinheit gleichzeitig das Dosieren von der zweiten Kolben-und Zylindereinheit übernommen wird. Hierzu ist ein Schaltventil 9 mit einer sog. Nullüberdeckung vorgesehen, das den Komponentenstrom aus der einen Kolben-und Zylindereinheit zwangsläufig und gleichzeitig mit dem Abschalten der anderen Kolben-und Zylindereinheit freigibt. Die Vorspannung und Druckangleichung erfolgt durch eine hydraulische Steuereinrichtung 8, die in den hydraulischen Kreis des Volumenstromes in Leitung 21 eingebaut ist und eine automatische Angleichung des Vorspanndruckes an den Dosierdruck bewirkt. Hierdurch ist eine Vorspannung und Druckangleichung ohne zusätzliche Bauteile auf der Komponentenseite möglich.

## Verfahren und Vorrichtung zum Dosieren und Mischen von Mehrkomponenten-Kunststoffen, insbesondere Polyurethan

Die Erfindung betrifft ein Verfahren und eine Vorrichtung nach dem Oberbegriff des Anspruches 1.

Auf dem hier angesprochenen Gebiet der Verarbeitung von Mehrkomponenten-Kunststoffen sind grundsätzlich zwei Möglichkeiten bekannt, Komponenten zu dosieren. Die eine Möglichkeit besteht in dem Einsatz von kontinuierlich arbeitenden Dosierpumpen für die Komponenten, wobei es sich beispielsweise um Drehkolbenpumpen handelt. Die andere Möglichkeit besteht in dem Einsatz von herkömmlichen Kolbenpumpen. In diesem zweiten Fall wird dann diskontinuierlich gearbeitet, da nacheinander Füll-und Dosierhübe ausgeführt werden.

Aus der DE-PS 33 29 296 ist nun ein Verfahren und eine Vorrichtung der eingangs genannten Art bekannt, bei der der Einsatz von je zwei Kolben- und Zylindereinheiten für jede Komponente einen praktisch kontinuierlichen Betrieb ermöglicht. Dieses geschieht bei dieser bekannten Vorrichtung dadurch, daß zuerst die eine Kolben-und Zylindereinheit die Komponente ausdrückt, d.h. dosiert. Bevor diese erste Kolben-und Zylindereinheit das Ende ihres Dosierhubes erreicht hat, wird der Druck in der anderen Kolben-und Zylindereinheit auf den Dosierdruck vorgespannt und diese zweiten Kolben-und Dosiereinheit, die vorher mit Komponentenmaterial gefüllt wurde, wird zugeschaltet, so daß über einen gewissen Zeitraum beide Kolben-und Dosiereinheiten gemeinsam einen Dosierhub durchführen. Hierdurch soll eine gleichmäßige Dosierung erreicht werden. Außerdem sollen Drucksprünge, die beim Umschalten von der einen auf die andere Kolben-und Zylindereinheit auftreten können, vermieden werden, um so ein Kunststoffprodukt mit immer gleicher Qualität zu erzeugen. Für die Druckvorspannung ist bei dieser bekannten Vorrichtung eine dritte Kolben-und Zylindereinheit vorgesehen, in der ein gewisser Vorrat an Komponentenmaterial bereitsteht und zur Druckvorspannung und damit Angleichung abgerufen werden kann. Dieser Anteil des Komponentenmateriales, der für die Druckvorspannung bereitsteht, wird nicht mit umgewälzt, so daß es hier zu Entmischungen und den dadurch bedingten Nachteilen kommen kann. Auch kann diese Art der Druckangleichung zu einer unerwünschten Veränderung des Mischungsverhältnisses und der Austragleistung führen.

Insbesondere führt die Überlappung, d.h. die gemeinsame Bewegung der Kolben beider Kolben-und Zylindereinheiten dazu, daß die Zeit, die für jede Kolben-und Zylindereinheit zum Füllen zur Verfügung steht, entsprechend verringert wird. Es sind also hohe Füllgeschwindigkeiten erforderlich. Bei entsprechend hohen Anforderungen müssen zusätzlich aufwendige Füllpumpen eingesetzt werden.

Der Erfindung liegt nun die Aufgabe zugrunde, ein Verfahren und eine Vorrichtung der eingangs genannten Art zu schaffen, und dabei einerseits eine kontinuierliche Arbeitsweise ohne Schwierigkeiten beim Umschalten von der einen auf die andere Kolben-und Zylindereinheit zu gewährleisten, und dabei andererseits eine gemeinsame Bewegung der Kolben der beiden Kolben-und Zylindereinheiten während des Dosierens zu vermeiden, um ausreichend Zeit zum Füllen zur Verfügung zu haben.

Diese Aufgabe wird bei dem erfindungsgemäßen Verfahren durch das Kennzeichen des Anspruchs 1 und bei der Vorrichtung durch das Kennzeichen des Anspruches 2 gelöst.

Erfindungsgemäß werden die beiden Kolben- und Zylindereinheiten einer Komponente durch Einschaltung eines Schaltventiles mit Nullüberdeckung in den Komponentenstrom im Anschluß an die Kolben-und Zylindereinheiten so gesteuert, daß eine Überlagerung der Auspreßbewegungen ihrer Kolben nicht mehr erfolgt. Die eine Kolben-und Zylindereinheit übernimmt die Dosierung erst dann - praktisch gleichzeitig - wenn die andere Kolben-und Zylindereinheit abgeschaltet ist. Eine gemeinsame Auspreßbewegung, die praktisch eine Verkürzung der Füllzeit nach sich ziehen würde, findet nicht statt. Drucksprünge und damit Nachteile bei der Herstellung der entsprechenden Kunststoffgegenstände werden durch eine exakte und automatische Druckangleichung und durch ein präzises Umschalten (Nullüberdeckung) vermieden.

Wenn die Vorrichtung so ausgelegt ist, wie in Anspruch 3 angegeben, so erfolgt die Vorspannung und Druckangleichung nicht durch eine entsprechend aufwendige und teure dritte Kolben-und Zylindereinheit, sondern durch eine einfache hydraulische Schaltung. Es treten auch keine Nachteile in bezug auf in der Vorspanneinheit "stillstehendes" Komponentenmaterial auf, da die gesamte Vorspannung hydraulikseitig bewirkt wird. Da die Vorspannung und Druckangleichung automatisch erfolgt, werden Drucksprünge beim Umschalten sicher verhindert. Die gesamte Steuerung erfolgt bei der Erfindung hydraulikseitig, so daß hydraulikseitig, handelsübliche Hydraulikkomponenten verwendet werden können, die nicht wie komponentenseitig eingesetzte Steuerorgane verkleben und zu hohem Verschleiß neigen.

Im folgenden wird die Erfindung unter Hinweis auf die Zeichnung anhand eines Ausführungsbeispieles näher erläutert.

Es zeigt:

Figur 1 ein Schaltbild einer Vorrichtung zur Durchführung des erfindungsgemäßen Verfahrens für eine Komponentenseite und

Figur 2 einen Schnitt durch ein komponentenseitig einzusetzendes Schaltventil mit Nullüberdeckung in vergrößertem Maßstab.

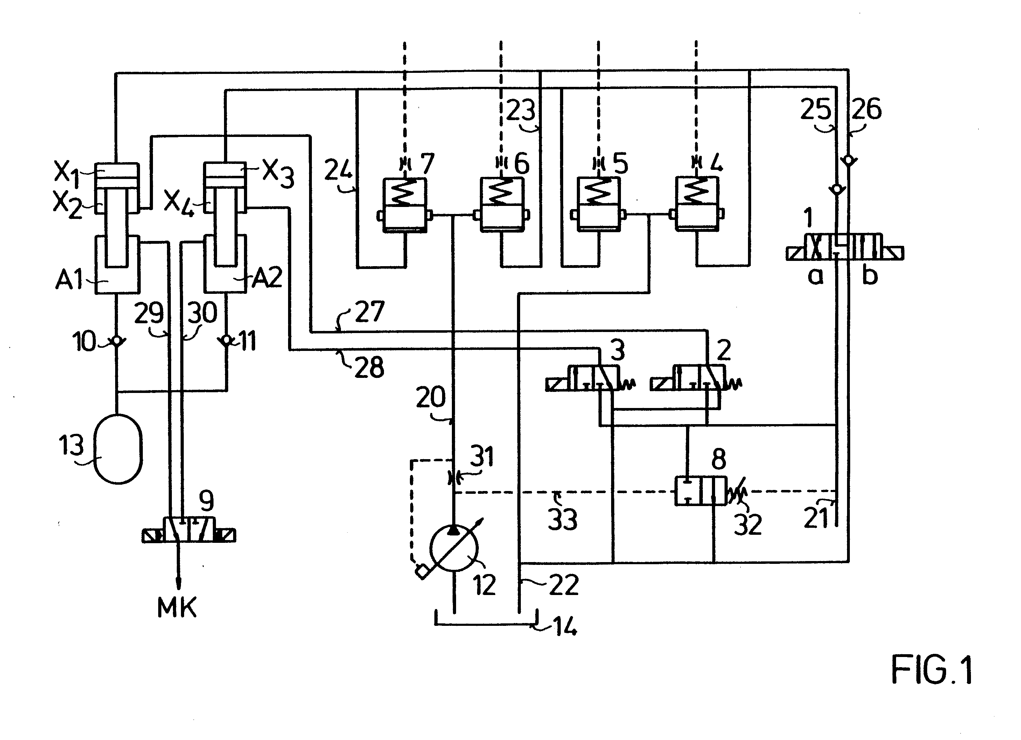

Das Schaltbild nach Figur 1 zeigt lediglich die wesentlichen Teile für eine Komponentenseite. Die andere Komponentenseite ist identisch.

Für jede Komponente ist ein Vorratstank 13 vorgesehen. Ebenso ist für jede Komponente ein Schaltventil 9 vorgesehen, dessen Ausgang zu einem gemeinsamen Mischkopf MK führt.

Für eine Komponente sind zwei Kolben-und Zylindereinheiten $A_1$ und $A_2$ vorgesehen. Die Endschalter der Hydraulikseite der beiden Kolben-und Zylindereinheiten sind mit $X_1$, $X_2$ bzw. $X_3$, $X_4$ bezeichnet. Aus dem Vorratstank 13 führen zu jeder Kolben-und Zylindereinheit $A_1$, $A_2$ Fülleitungen über Rückschlagventile 10 und 11. Aus jeder Kolben-und Zylindereinheit führen Vorlaufleitungen 29 und 30 zu dem Schaltventil 9.

Die hydraulische Steuerung wird durch drei Wegeventile 1, 2 und 3 gebildet, die in ihrer Grundstellung gezeichnet sind. Weiterhin sind vier Cartridgeventile 4, 5, 6 und 7 vorgesehen, die in der Grundstellung geschlosen sind und deren Vorsteuerventile nicht gezeichnet sind. Weiterhin ist eine hydraulische Steuervorrichtung 8 vorgesehen. Der Tank für das hydraulische Medium ist mit 14 bezeichnet. Die verschiedenen Hydraulikleitungen sind mit 21 bis 28 bezeichnet.

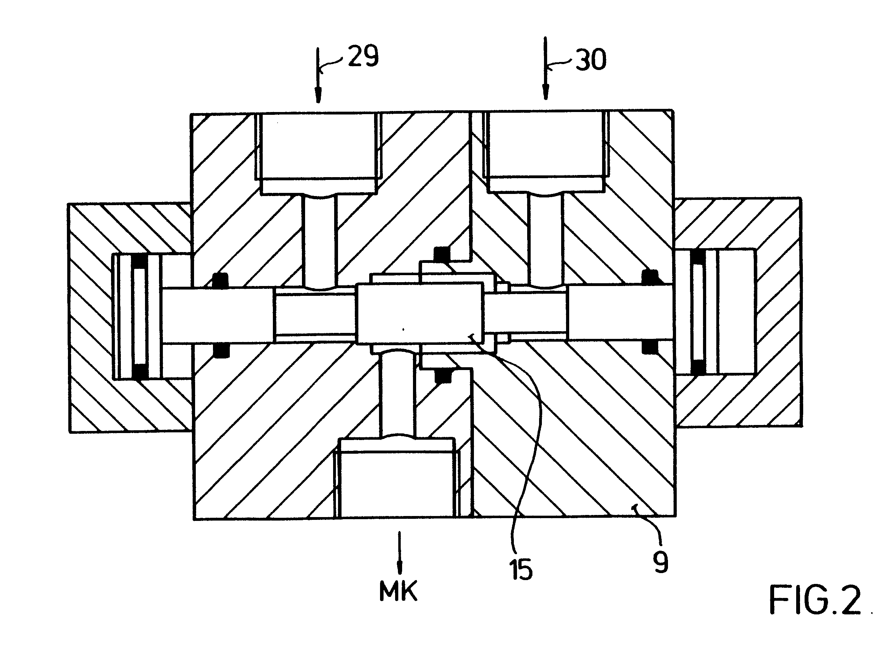

In Figur 2 ist das Schaltventil 9 im Schnitt dargestellt, wobei die zeichnerische Darstellung im wesentlichen maßstabsgerecht ist, so daß die Nullüberdeckung sichtbar wird.

Ventilsitz und Steuerkante für die eine Seite, zu der die Vorlaufleitung 29 führt, sind so dimensioniert und auf den Ventilsitz und die Steuerkante der anderen Seite, zu der die Vorlaufleitung 30 führt, abgestimmt, daß der Komponentenstrom zu dem Mischkopf aus der Vorlaufleitung 29 gleichzeitig mit dem Verschließen des Komponentenstromes aus der Vorlaufleitung 30 freigegeben wird. Ein solches Ventil ist ein Schaltventil mit Nullüberdeckung.

Im folgenden wird die Arbeitsweise der Vorrichtung, beginnend bei einer Ausgangsstellung, beschrieben.

Der Kolben der Kolben-und Zylindereinheit $A_1$ steht oben, d.h. der Endschalter $X_1$ gibt ein entsprechendes Signal. Der Kolben der anderen Kolben-und Zylindereinheit $A_2$ steht unten, d.h. der Endschalter $X_4$ gibt ebenfalls ein entsprechendes Signal. Durch Öffnen des Ventiles 6 fließt von der Hydraulikpumpe 12 Dosiermedium über die Leitungen 20 und 23 zu der Kolben-und Zylindereinheit $A_1$. Über die Leitung 27 und das Wegeventil 2 fließt das verdrüngte Dosiermedium in die Leitung 22 und somit in den Tank 14. Der Kolben der Kolben-und Zylindereinheit $A_1$ bewegt sich nach unten und preßt Komponentenmaterial über die Vorlaufleitung 29 und das Schaltventil 9 zum Mischkopf MK.-Das Rückschlagventil 10 verhindert einen Rückfluß zu dem Vorratstank 13.

Gleichzeitig mit dem Ventil 6 schaltet das Wegeventil 3 und öffnet das Ventil 5. Der von einer nicht gezeigten Volumenstromquelle erzeugte Volumenstrom fließt über die Leitung 21, das Wegeventil 3 und die Leitung 28 zu der Kolben-und Zylindereinheit $A_2$, wodurch der Kolben nach oben bewegt wird.

Das verdrängte Dosiermedium wird über das Ventil 5 und die Leitung 22 zum Tank 14 verdrängt. Das Rückschlagventil 11 öffnet und Komponentenmaterial strömt vom Vorratstank 13 in die Kolben-und Zylindereinheit $A_2$, so daß diese gefüllt wird. Erreicht der Kolben der Kolben-und Zylindereinheit $A_2$ seine obere Stellung, gibt der Endschalter $X_3$ ein entsprechendes Signal. Nun schließt das Ventil 5 und das Wegeventil 3 schaltet in seine Grundstellung. Das Wegeventil 1 schaltet in die Position b. Der Volumenstrom aus der Leitung 21 fließt nun über die Leitung 25 zu der Kolben-und Zylindereinheit $A_2$ und spannt das Komponentenmaterial in dieser Kolben-und Zylindereinheit $A_2$ und der Leitung 30 bis zum Schaltventil 9 vor. Das Schaltventil 9 schließt die Leitung 10 leckagesicher.

Die hydraulische Steuereinrichtung 9 bewirkt, daß der Vorspanndruck in der Kolben-und Zylindereinheit $A_2$ exakt dem Dosierdruck in der Kolben-und Zylindereinheit $A_1$ entspricht.

Erreicht nun der Kolben der Kolben-und Zylindereinheit $A_1$ seine untere Stellung, dann gibt der Endschalter $X_2$ ein Signal. Nun schließt das Ventil 6 und öffnet das Ventil 7. Gleichzeitig schaltet das Schaltventil 9. Der Dosierstrom fließt nun über die Leitung 20, das Ventil 7 und die Leitung 24 zu der Kolben-und Zylindereinheit $A_2$ und bewegt deren Kolben nach unten, wodurch das Komponentenmaterial über die Leitung 30 und das Schaltventil 9 zum Mischkopf ausgepreßt wird. Das Wegeventil 1 schaltet in seine Grundstellung und das Wegeventil 2 gibt durch Schalten den Weg für den Volumenstrom aus der Leitung 21 in die Leitung 27 frei. Der Volumenstrom fließt zu der Kolben-und Zylindereinheit $A_1$ und bewegt deren Kolben nach oben. Da auch das Ventil 4 öffnet, kann das verdrängte Dosiermedium über dieses Ventil 4 in die Leitung 22 und somit zum Tank 14 fließen. Da das Rückschlagventil 10 automatisch öffnet, wird die Kolben-und Zylindereinheit $A_1$ mit Komponentenmaterial gefüllt. Erreicht der Kolben der Kolben-und Zylindereinheit $A_1$ wieder seine oberste Stellung, so gibt

der Endschalter $X_1$ Signal. Nun schließt das Ventil 4 und schaltet das Wegeventil 2 in seine Grundstellung. Das Wegeventil 1 wechselt in seine Position a. Der Strom des Dosiermediums aus der Leitung 21 fließt nun über die Leitung 26 zu der Kolben-und Zylindereinheit $A_1$ und spannt das Komponentenmaterial in dieser Kolben-und Zylindereinheit $A_1$ und in der Leitung 29 bis zum Schaltventil 9 vor. Das Rückschlagventil 10 verhindert ein Rückfließen in den Vorratstank 13. Die hydraulische Steuereinrichtung 8 bewirkt wieder eine Vorkompression auf einen Druck, der dem Dosierdruck in der Kolben-und Zylindereinheit $A_2$ entspricht.

Erreicht der Kolben der Kolben-und Zylindereinheit $A_2$ seine untere Stellung, gibt der Schalter $X_4$ Signal. Nun schließt das Ventil 7 und öffnet wieder das Ventil 6. Gleichzeitig schaltet das Schaltventil 9. Die Dosierung erfolgt wieder durch die Kolben-und Zylindereinheit $A_1$. Das Wegeventil 1 wechselt wieder in seine Grundstellung. Durch Öffnen des Ventiles 5 und durch Schalten des Wegeventiles 3 wird wieder der Füllvorgang der Kolben-und Zylindereinheit $A_2$ eingeleitet.

Im folgenden wird die Druckangleichung beim Vorspannen im einzelnen beschrieben.

Zum Vorspannen der Komponente in einer gefüllten Kolben-und Zylindereinheit wird der Volumenstrom verwendet, der auch zum Füllen dient. Damit nach dem Vorspannen kein Dosierfehler auftritt, soll der Vorspanndruck gleich dem Dosierdruck sein. Ein geringer Vorspanndruck führt zum Druckeinbruch beim Dosierwechsel. Ist der Vorspanndruck zu hoch, so entstehen Volumenfehler aufgrund von Dekompression. Diese Aufgabe übernimmt die hydraulische Steuereinrichtung 8.

Bei der gezeichneten hydraulischen Steuereinrichtung um ein Zwei/Zwei-Wegeventil, das in der Grundstellung geschlossen ist, d.h. durch Steuermedium, das von der Dosierpumpe 12 entnommen wird, zugehalten wird.

Beim Vorspannen steigt der Druck in der Leitung 21 an, und es entsteht ein Gleichgewicht zwischen dem Druck in Leitung 33 und dem Vorspanndruck plus Feder 32. Der Druck in Leitung 33 ist um den Betrag des konstanten Druckabfalles von der Drossel 31 größer als der Dosierdruck in Leitung 20. Diese Differenz wird von der Feder 32 ausgeglichen. Bei diesem Gleichgewicht öffnet die hydraulische Steuereinrichtung 8 und der zusätzliche Volumenstrom fließt zum Tank 14 ab. Es wird also erreicht, daß der Vorspanndruck exakt dem Dosierdruck ausgeglichen wird. Außerdem stellt sich der Vorspanndruck immer zum jeweils erforderlichen Dosierdruck passend automatisch ein. Im Betrieb ist es nicht erforderlich, bei veränderten Produktionsbedingungen eine Neueinstellung vorzunehmen.

Der Volumenstrom zum Füllen und Vorspannen in der Leitung 21 kann auf unterschiedliche Weise bereitgestellt werden und zwar entweder durch eine separate Volumenstromquelle (Konstant-oder Regelpumpe) oder durch Entnahme einer Teilmenge aus dem Strom der Dosierpumpe.

Der Volumenstrom in Leitung 21 muß so bemessen sein, daß die Füllgeschwindigkeit des Kolbens der jeweils einen Kolben-und Zylindereinheit immer größer ist, als die Dosiergeschwindigkeit des Kolbens der jeweils anderen Kolben-und Zylindereinheit. Dies ist erforderlich, damit nach Abschluß des Füllvorganges der jeweils einen Kolben-und Zylindereinheit genügend Zeit bleibt, um das Komponentenmaterial auf Dosierdruck vorzuspannen.

## Ansprüche

1. Verfahren zum Dosieren und Mischen von Mehrkomponenten-Kunststoffen, insbesondere Polyurethan, bei dem jede Komponente durch mindestens zwei zeitweise im Gegentakt betriebene hydraulische Kolben-und Zylindereinheiten dosiert wird, wobei der Druck für die die Dosierung übernehmende zweite Kolben-und Zylindereinheit vor Beginn des Dosierens dem Druck der gerade dosierenden ersten Kolben-und Zylindereinheit angeglichen wird, dadurch gekennzeichnet, daß die zweite Kolben-und Zylindereinheit (z.B. $A_2$) die Dosierung gleichzeitig mit der Abschaltung der ersten Kolben-und Zylindereinheit (z.B. $A_1$) übernimmt (Nullüberdeckung).

2. Vorrichtung zur Durchführung des Verfahrens nach Anspruch 1, dadurch gekennzeichnet, daß in den Komponentenleitungen (29 und 30) der Kolben-und Zylindereinheiten ($A_1$, $A_2$) zur Dosierung einer Komponente ein Schaltventil (9) mit Nullüberdeckung vorgesehen ist, das zwangsläufig den Strom aus der einen Kolben-und Zylindereinheit (z.B. $A_2$) bei Abschaltung der anderen Kolben-und Zylindereinheit (z.B. $A_1$), freigibt.

3. Vorrichtung nach Anspruch 2, dadurch gekennzeichnet, daß zwischen dem hydraulischen Dosierstrom (Leitung 20) von der hydraulischen Dosierquelle (Pumpe 12) und einem zusätzlichen Volumenstrom (Leitung 21) von einer entsprechenden, gesonderten Druckquelle (nicht gezeigt) eine hydraulische Steuereinrichtung 8 vorgesehen ist, die eine Druckangleichung von Dosierstrom und Volumenstrom vor Umschaltung von der einen auf die andere Kolben-und Zylindereinheit automatisch bewirkt.

FIG.1

0 287 968

0505/162/87

FIG.2

0 287 968

0505/162/87